# EUROPEAN PATENT APPLICATION

(11) **EP 1 113 387 A2**
(43) Date of publication of application: **04.07.2001**
(21) Application number: 00403720.6
(22) Date of filing: 29.12.2000
(51) Int. Cl.: G06K 19/073

(54) **Smart card having a non-volatile memory with a novel mapping**

(30) Priority: 31.12.1999 US 475956
(71) Applicant: SCHLUMBERGER Systèmes, 92120 Montrouge (FR)
(72) Inventor: Amard, Franck, 94420 Le Plessis Trévise (FR)
(74) Representative: Macquet, Christophe

(57) **Abstract**

A smart card with a non-volatile memory with a novel configuration that extends the functionality thereof while providing an interface that is compatible with existing smart card systems. The smart card has a processor for executing applications and a memory, coupled to the processor, for storing multiple applications. The memory has a mapping that includes a first application area for storing applications, a second application area for storing applications, and a third application area for flexibly extending the functionality of the smart card. The portions of the mapping that are unrelated to the extension of functionality are configured to be compatible with existing smart card systems.

## Description

This invention relates generally to secure portable tokens, such as smart cards and in particular to smart cards having a non-volatile memory with novel mapping.

As is well known, a smart card may be a plastic, credit card-sized card containing a semiconductor chip, such as a microprocessor built into the smart card so that it may execute some simple application programs, which may be referred to as applets. Some examples of the applications in a smart card include security and authentication, information storage and retrieval, and credit and debit operations for managing value accounts, such as prepaid phone time and debit accounts. Each value account application on the smart card has a particular type of use rights associated with the application. For example, a prepaid phone time application may have a predetermined number of prepaid phone minutes that are used up as phone calls are made with the card, and a prepaid public transit account may have an initial preset monetary values which is debited with each use of public transportation. To store and execute these applets, these smart cards have a built-in memory and processor. In order to ensure the security of the use rights on these smart cards, only the processor within the smart card may ordinarily alter the value of the use rights, and only after an authorization sequence has been successfully conducted. The network in which the smart card is being used does not have any direct access to the memory of the smart card nor to the use rights of any application.

There are generally two different types of smart cards, i.e., disposable smart cards and permanent, non-disposable smart cards. A disposable smart card may have a rudimentary semiconductor chip embedded within the smart card and may have a limited amount of memory and some hardwired logic. The disposable smart cards may have a predetermined initial amount of prepaid use rights or other value stored in the memory of the smart card established when the smart card is manufactured. The prepaid use rights are then depleted as the smart card is used. Prepaid phone cards or subway fare cards are examples of disposable smart cards because these smart cards are thrown away after the prepaid use rights are depleted. These disposable smart cards are inexpensive because of the rudimentary semiconductor chip, but they have limited utility since their stored value may not be replenished, and other applications may not be installed on them. Due to the limited memory and processing power, these disposable smart cards also may not execute sophisticated cryptographic algorithms, which means that these disposable smart cards are less secure.

The non-disposable, permanent smart cards may have a more complex semiconductor chip embedded within the card, and may have a programmable micro-controller and an expanded memory. The memory may store one or more applets that have separate predetermined amounts of use rights for different functions. Importantly, these permanent smart cards have use rights that may be replenished so that the permanent smart card need not be discarded once the use rights are depleted. Examples of these permanent smart cards include banking cards according to the Europay/Mastercard/Visa (EMV) standard, and pay television access control cards. These permanent smart cards have more memory for storage of multiple applets and the use rights on the smart card may be separately and independently replenished. However, these permanent smart cards are also more expensive due to the additional memory and the microcontroller, and the card issuer may only perform the replenishment.

Initially, many companies issued disposable smart cards due to the lower initial investment. However, due to the security concerns of these disposable smart cards and the limited applications that may be run on these disposable cards, the current trend is to use permanent smart cards because several applications may be loaded onto a single permanent smart card. The permanent smart card is also more secure because more sophisticated cryptographic techniques may be used.

Most conventional permanent smart cards may have a memory unit that may include a read only memory (ROM), a random access memory (RAM), and a non-volatile memory (NVM). The NVM may be, for example, a flash memory such as a flash electrically erasable programmable read only memory (Flash EEPROM), or an EEPROM. These permanent smart cards receive all of their power from the terminal to which they are connected during use. As a consequence, the RAM, which is volatile memory, may be used only as a scratch pad memory for simple computations that do not need to be stored. The ROM, which is permanent, may store the operating system (OS) of the smart card and other programs that do not need to be updated or changed, such as certain permanent applets. The NVM may store certain applets and the use rights or values associated with all applications in the smart card. These conventional permanent smart cards may have multiple applications that reside in the memory of the smart card.

Unfortunately, the current memory maps in the NVM have several disadvantages. For example, the current memory maps tend to have limited applications. Also, the prior art memory maps do not offer the flexibility to incorporate new applications without substantially re-programming the software and re-configuring the hardware of such systems. Also, the current mappings are at times rigid and further limit the scope of utilization of such cards.

Accordingly, there is a need for a system and method for using a novel memory mapping which avoid these and other problems of known devices, and it is to this end that the present invention is directed.

According to one embodiment of the present invention, a smart card with a non-volatile memory with a novel configuration that extends the functionality thereof while providing an interface that is compatible with existing smart card systems is provided. The smart card has a processor for executing applications and a memory, coupled to the processor, for storing multiple applications. The memory has a mapping that includes a first application area for storing applications, a second application area for storing applications, and a third application area for flexibly extending the functionality of the smart card. The portions of the mapping that are unrelated to the extension of functionality are configured to be compatible with existing smart card systems.

FIG. 1 illustrates a block diagram of a smart card configured according with one embodiment of the present invention.

FIG. 2 is a table illustrating an exemplary protocol.

FIG. 3 illustrates a block diagram of the non-volatile memory of FIG. 1 according to one embodiment of the present invention.

FIG. 4 illustrates the memory areas of a non-volatile memory in accordance with one embodiment of the present invention.

FIG. 5 illustrates an exemplary memory mapping configured in accordance with one embodiment of the present invention.

The subject invention will be described with reference to numerous details set forth below, and the accompanying drawings will illustrate the invention. The following description and the drawings are illustrative of the invention and are not to be construed as limiting the invention. Numerous specific details are described to provide a thorough understanding of the present invention. However, in certain instances, well-known or conventional details are not described in order not to unnecessarily obscure the present invention in detail. In the drawings, the same element is labeled with the same reference numeral.

This invention is particularly applicable to a smart card that employs a novel memory mapping. In this context, the invention will be described. However, it will be appreciated, however, that the system and method in accordance with the invention has greater utility.

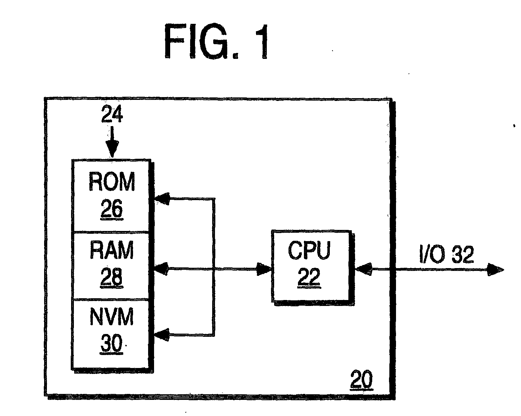

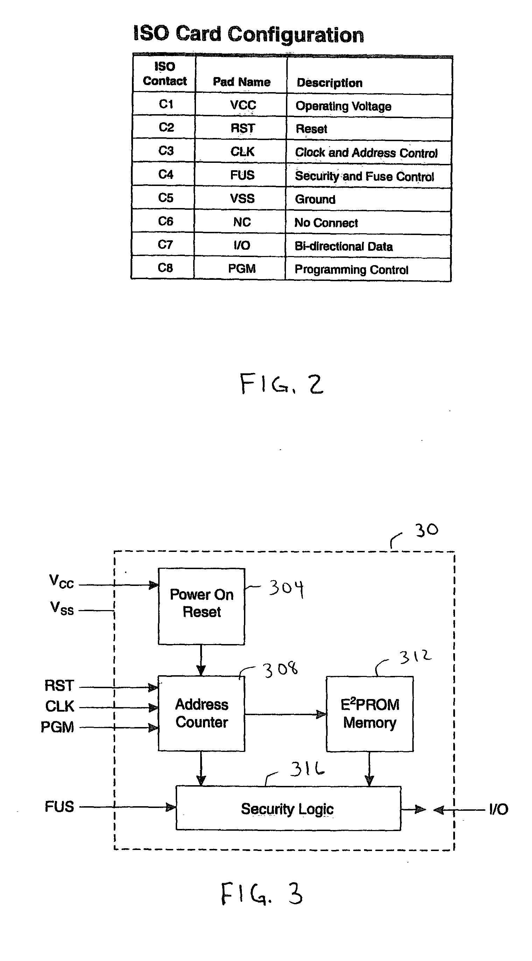

FIG. 1 is a block diagram of a smart card 20, also known as a token, of the type with which the invention may be employed. The smart card may be used in connection with the system and method of loading applications into a smart card in accordance with the invention. The smart card may preferably be a permanent smart card, but may also be a disposable smart card. This smart card 20 may have a processor or CPU 22 and a memory 24. The memory may comprise a read only memory (ROM) 26, a random access memory (RAM) 28, and a non-volatile memory (NVM) module 30 that is described in greater detail hereinafter with reference to FIG. 3. The NVM module may utilize any type of writable nonvolatile memory, such as an electrically erasable, programmable read only memory (EEPROM), a battery backed RAM, or a flash memory, that may retain stored data when no electrical power is supplied to the memory. The ROM may preferably store the operating system (OS) which controls the operation of the CPU of the smart card, and the RAM may be used as a temporary scratchpad memory. Because the smart card receives its electrical power from the terminal into which it is inserted, as described below, all of the contents of the RAM will be lost when the smart card is removed from the terminal. The NVM may preferably be used to store one or more applications that may be referred to as applets due to the small size of the actual program code. Each of these applets may have associated use rights that are specific to the applet. Other permanent applications that do not change, such as a credit/debit program, may be stored in the ROM.

The processor 22 controls the operation of the smart card. The processor may be connected to all of the memories within the memory system 24. Since there are use rights associated with an application, there is a need to make the smart card secure to prevent theft or alteration of the use rights. To accomplish this security, the processor is the only system that is capable of accessing any of the memories. There is no direct access to any of the memories from outside of the smart card. In addition, any outside access to the memories of the smart card must be conducted through an input/output (I/O) line 32 that is connected to the processor 22. The smart card may also have more than one I/O line provided that access to each I/O line is carefully controlled so that there is no direct access to any of the memories from outside of the smart card. Thus, the processor may authenticate and validate incoming requests prior to making any change in the use rights of an application stored in the smart card, and may prevent unwanted or illegal attempts to decrease the use rights of an application. This authentication and validation may be conducted using cryptographic systems, such as public key encryption, or any other security system. The I/O signals 32 may conform to a predetermined protocol.

FIG. 2 is a table illustrating an exemplary protocol. Specifically, FIG. 2 describes the ISO contact, pad name, and description of contacts for a smart card that conforms to International Standard Organization (ISO) 7816. For a general description on smart cards and their applications, please refer to Ayer, Kenneth R. and Schuler, Joseph F., Smart Card Primer, 1994, Minneapolis, Minnesota, The Schuler Consultancy.

The details concerning the mechanical and electrical specifications of the smart cards are generally well-known and standardized. One such set of standards is published by the American National Standards Institute (ANSI), 11 East 42nd Street, New York, NY 10036 under the title, "Identification Cards-Integrated Circuits Cards with Contacts," International Standards Organization (ISO) ISO 7816, which is incorporated by reference herein.

Other International Standards Organization (ISO) standards are directed to other aspects of smart cards, such as electrical signals and transmission protocols, inter-industry commands for interchange numbering systems and registration procedure for application identifiers, and inter-industry data elements. Specific applications and uses of smart cards may also have their own standards. For example, standards for smart cards related to telecommunication (e.g., smart cards for use with mobile telephones) are defined by GSM, and standards related to financial transaction are addressed in ISO 9992 and ISO1020.

In Europe, groups have developed their own set of standards for smart cards. For example, the European Telecommunication Standards Institute (ETSI), the European Committee for Banking Standards (ECBS), and the Commite Europeene de Normalisation (CEDN) have all published their own set of standards.

These smart cards are manufactured by and are commercially available from several companies, including the assignee of the present invention, Schlumberger Test & Transactions of Montrouge, France. Schlumberger is a leading provider of smart card-based solutions worldwide who continues to evolve the next generation of smart cards, parking terminals, ticketing machines, pay phones, banking terminals, servers, software, applications and systems integration.

The organization of the non-volatile memory 30 of the smart card will now be described. FIG. 3 illustrates a block diagram of the non-volatile memory 30 of FIG. 1 according to one embodiment of the present invention. The non-volatile memory 30 may include a power on reset (POR) module 304 that has a first input for receiving the operating voltage (e.g., Vcc) and a second input for receiving the ground voltage (e.g., Vss). The power on reset (POR) module 304 detects the operating voltage as is ramps from 0V to a valid operating voltage and in response resets the address counter 308 and resets any internal flags or signals. The non-volatile memory 30 may also include an address counter 308 that has a first input for receiving a reset signal, a second input for receiving the clock and address control signal, a third input for receiving the programming control signal, and a fourth input for receiving a power on reset signal from the POR module 304. Based on these input signals, the address counter 308 provides a signal related to an address a memory 312 and the security logic block 316. The memory 312 may be a non-volatile memory, which is this non-limiting example may be an electrically erasable programmable read only memory (EEPROM). The non-volatile memory 30 may also include a security logic module 316 that is coupled to the address counter 308 and the memory 312 for information exchange. The security logic module 316 receives the signal related to the address, the security and fuse control signal, and data from memory 312, and selectively exchanges data with other components in the smart card 20.

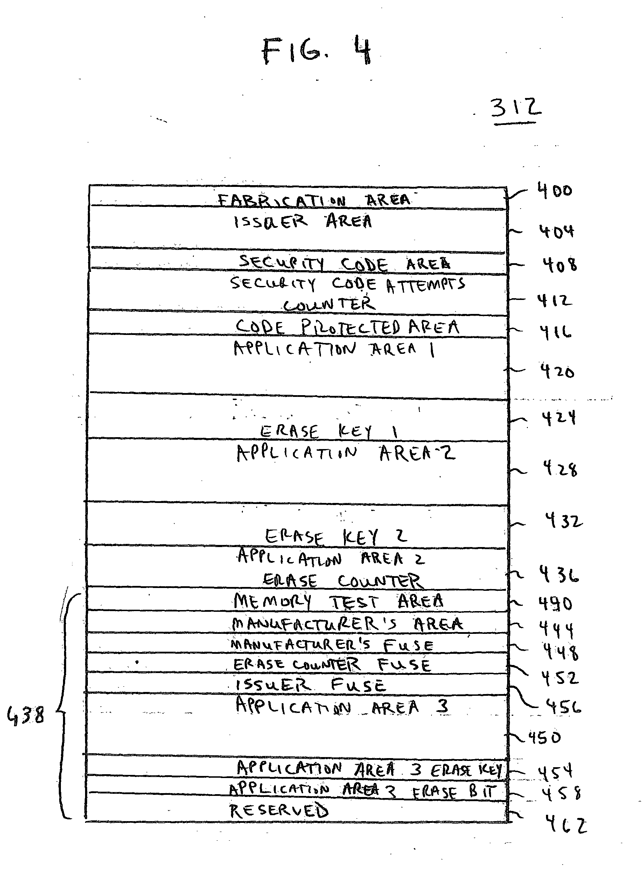

FIG. 4 illustrates the memory areas of a non-volatile memory in accordance with one embodiment of the present invention. The memory 312 may include a fabrication area 400, which may store data specified and predetermined by the chip manufacturer. Fabrication area 400 is programmed by the chip manufacturer and may not be changed. Accordingly, only read access is allowed in the fabrication area 400. The memory 312 may have an issuer area 404 for storing issuer specific information, such as serial numbers and dates. A card issuer may program the issuer area 404 during the personalization phase. After the issuer fuse, which is described in greater detail hereinafter, has been blown, issuer area 404 becomes a read-only area.

The memory 312 may also have a security code area 408 for storing a predetermined security code that is programmed by the chip manufacturer. During personalization, this security code must be entered and verified by the security logic 316 before access to the memory 312 is granted. Specifically, erase and write operations are allowed in application areas 1, 2, and 3, (areas 420, 428, and 450) and the Code Protected Area 416 when the security code is verified. Once this code has been entered and verified, the issuer may change the security code. The security code area 408 protects the NVM module 30 during transportation to the card issuer.

The memory 312 may also have a security code attempts counter 412 for counting the number of consecutive incorrect presentations of the security code. After a predetermined number of consecutive incorrect security code presentations, the first four bits of the SCAC are written to "0", thereby the user is permanently blocked from access to the application areas (420, 428, and 450) and other areas controlled by the security code.

The memory 312 may also have a code protected area 416 that allows read access, but requires security code verification prior to write access being granted.

User application data may be loaded into one of three applications areas, such as application area 1 420, application area 2 428, or application area 3 450. Each application area may have associated therewith related areas. For example, application area 1, application area 2, and application area 3 each has an associated erase key area (e.g., 424, 432, and 454, respectively).

A novel aspect of the present invention is the provision of a third application area 450 for flexibly extending the functionality of the smart card while maintaining compatibility with smart cards having a non-volatile memory configured with existing memory configurations and mappings. Specifically, the interface of the smart card is maintained so that no re-work or modification of existing software or terminal applications is needed. For example, the third application area 450 may be utilized for implementing a new service application without changing the entire system (e.g., the software, the terminal applications, the mapping of the non-volatile memory 30 un-related to the extension of functionality). Accordingly, existing terminals, such as a point-of-sale (POS) terminal, vending machine, etc. may read a smart card having a NVM 30 with the novel configuration of the present invention without compatibility problems. In this manner, a smart card equipped with the NVM 30 configured in accordance with the teachings of the present invention allows a new service or application to be introduced in a progressive manner and non-interrupting manner.

Moreover, the third application area 450 may be utilized to store additional information. One application may be the storage of information that may be used to identify and authenticate a particular user. For example, this information may be related to one's fingerprint or other identifying indicia. In this regard, it is preferable for the third application area 450 to have a size that is greater than the size of the first application area 420 or the second application area 428, although this may not be desired in all cases. For example, the third application area 450 may include 512 bits, which is twice the size of the first application area 420 and the second application area 428 that are each typically 256 bits in size. It is noted that the size of the third application area 450 may be varied to suit a particular data or service related application.

Another novel aspect of the memory mapping of the present invention is the provision of fuse areas in the memory map. In accordance with one embodiment, the memory 312 may include a manufacturer's fuse 448, an erase counter fuse 452, and an issuer fuse 456. The manufacturer's fuse 448 is used to control Write and Erase operations to the manufacturer's area 444. When the security code has been validated and both the issuer fuse 456 and the manufacturer's fuse 448 are unblown, Write and Erase operations are allowed in the manufacturer's area 444. Blowing the issuer fuse 456, disables the manufacturer's fuse 448 if it has not been blown previously.

The erase counter fuse 452 determines whether the erase counter 2 432 is utilized to limit the number of erases in application area 2 in security mode 2. If the erase counter fuse is "unblown", then the number of erases in the application area 2 are limited to a predetermined number (e.g., 128), which is the current maximum set by prior art mappings. The novel memory mapping of the present invention allows the disabling of this maximum so that un-limited erases are allowable. If the erase counter fuse is "blown", then the number of erases to the application area 2 is unlimited. It is noted that after the issuer fuse 456 is blown, the state of the issuer fuse 456 is locked and may not be changed.

The issuer fuse 456 may be a single bit EEPROM fuse that is utilized to change the security mode of NVM module 30 from security mode 1 to security mode 2. When in security mode 1, the NVM module 30 may be personalized for use in different smart cards 20. Access conditions in security mode 1 and access conditions in security mode 2 are well known in the art and is not described herein.

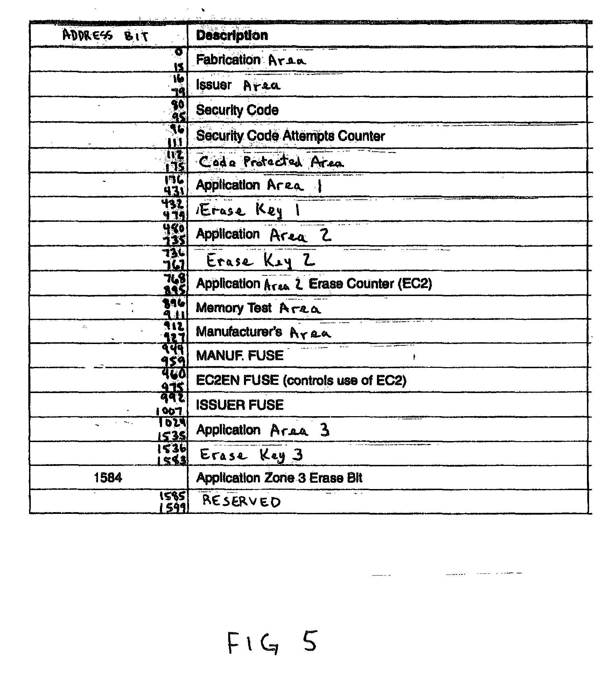

FIG. 5 illustrates an exemplary memory map for memory 312 in accordance with one embodiment of the present invention. The memory map specifies the bit address and the number of bits for each of the memory areas described hereinabove. It is noted that the bit addresses, the number of bits for each memory area, and the placement of the areas within the memory map may be modified to suit a particular application.

A method of blowing the manufacturer's fuse area 448 according to one embodiment of the present invention is now described. First, the address counter 308 is set to a predetermined address range (e.g., an address between address 944 and address 959). Next, it is determined if a valid security code been presented. If no, the manufacturer fuse area is not modified. If yes, a "0" is provided to the reset (RST) pin. Next, a write operation is performed. After these sequence of steps, the manufacturer fuse 448 is at a logic "0" state. It is noted that the security and fuse control (FUS) pin may be either a "0" or a "1" during this process.

A method of blowing the erase counter fuse 452 according to one embodiment of the present invention is now described. The address counter 308 is set to a predetermined address range (e.g., an address between address 960 and address 975). Next, it is determined if a valid security code been presented. If no, the erase counter fuse area 452 is not modified. If yes, a "1" is provided to the security and fuse control (FUS) pin. Then, a "0" is provided to the reset (RST) pin. Thereafter, a write operation is performed. After these sequence of steps, the erase counter fuse area 456 is at a logic "0" state.

A method of blowing the issuer fuse area 456 according to one embodiment of the present invention is now described. The address counter 308 is set to a predetermined address range (e.g., an address between address 992 and address 1007). Next, it is determined if a valid security code been presented. If no, the issuer fuse area is not modified. If yes, a "0" is provided to the reset (RST) pin. Then, a write operation is performed. After these sequence of steps, the issuer fuse area 456 is at a logic "0" state. It is noted that the security and fuse control (FUS) pin may be either a "0" or a "1" during this process.

While the foregoing has been with reference to a particular embodiment of the invention, it will be appreciated by those skilled in the art that changes in this embodiment may be made without departing from the principles and spirit of the invention, the scope of which is defined by the appended claims.

## Claims

1. A smart card comprising:
a processor for executing an application;
a memory, coupled to the processor, for storing multiple applications, the memory having a mapping that includes a first application area for storing applications, a second application area for storing applications, and a third application area for flexibly extending the functionality of the smart card; wherein the portions of the memory unrelated to the extension of functionality are configured to be compatible with existing smart card systems.

2. The smart card of claim 1 wherein the third application area is utilized to implement a first service application.

3. The smart card of claim 1 wherein the third application area is utilized for storing information for use in authentication purposes.

4. The smart card of claim 1 wherein the first application area has a first size, the second application has a second size, and the third application area has a third size that is greater than the first size and the second size.

5. The card of claim 4 wherein the first size and second size is 256 bits, and the third size is 512 bits.

6. The smart card of claim 1 wherein the mapping of the memory further comprises: a manufacturer's area for storing information related to the smart card manufacturer; and a manufacture fuse area for controlling write and erase operations to the manufacturer's area.

7. The smart card of claim 1 wherein the mapping of the memory further comprises: an erase counter fuse for use in determining whether the number of erases in the second application area is limited to a predetermined number or unlimited.

8. A non-volatile memory for storing multiple applications and adapted to be coupled to a processor for processing the applications, said memory comprising:
a first application area for storing applications;
a second application area for storing applications; and a third application area for flexibly extending the functionality of the smart card; wherein the portions of the memory mapping unrelated to the extension of functionality are configured to be compatible with existing smart card systems.
